# EUROPEAN PATENT APPLICATION

(11) **EP 0 811 734 A2**
(43) Date of publication of application: **10.12.1997**
(21) Application number: 97303226.1
(22) Date of filing: 12.05.1997
(51) Int. Cl.: E04D 3/36, F16B 19/14, F16B 33/00

(54) **A roofing fastener**

(30) Priority: 11.05.1996 GB 9609864
(71) Applicant: Talfab Holdings Limited, Worcester WR3 8TJ (GB)
(72) Inventor: Taylor, Peter, Bridgnorth, Shropshire WV15 6EP (GB)
(74) Representative: Tunstall, Christopher Stephen

(57) **Abstract**

A roofing fastener (2) is disclosed which is particularly useful for security aluminium roofing sheets to a roofing support structure. The fastener includes a head (14) and a shank (4) which is passed through the panel and into the support structure and has at least one protrusion for widening the hole in the panel through which the shank is passed. An insulating sleeve (22), located around a portion of the shank between the head and the protrusion, passes into the widened hole in the panel to insulate that portion of the shank from the panel. The sleeve thus prevents the shank coming into contact with the surrounding aluminium sheet and thus prevents electrolytic corrosion of the steel shank.

## Description

Roofing sheets or other building panels are fixed to wooden or steel structures by means of specially designed screws or fasteners. The tips of the fasteners are hardened and shaped into a drill bit so that they can be screwed directly through the roofing sheet, usually metallic, and into the structure below with a screw gun.

A problem with such a fastener is that it is commonly made of steel. When when it is used to fix aluminium sheeting, an electrolytic cell may be set up, in the presence of water, between the steel and the aluminium. Thus, the steel fastener undergoes electrolytic corrosion. The problem is compounded if salt is present in the water.

Such fasteners are normally electroplated with zinc or have an organic coating to help prevent corrosion, but the process of the fastener being drilled through the roofing sheet often damages this coating. Corrosion takes place around the head of the fastener which comes into contact not only with the aluminium sheet which the fastener secures to the structure, but also any overlapping aluminium sheet which is placed over it. The corrosion which takes place around the base of the head is prevented to some extent by the use of insulating washers to space the base of the head from the aluminium sheet which lies beneath it. However, preventing corrosion by the surrounding aluminium sheets coming into contact with the remainder of the head has proved more problematic.

Another problem with such fasteners is that the exposed head of the fastener does not match the colour of the sheet and is also susceptible to corrosion, especially as the coating is often damaged by the screw gun during fixing. One design provides a removable cap that fits over the hexagonal head of the fastener. The cap is however likely to drop off over time. A second solution provides a fixed integral plastic cap made of reinforced plastic which can engage with the screw gun. Although these caps will not fall off in use, the disadvantage is that there are various types of fasteners and caps available so that a supplier has to keep a very large number of different fasteners in stock.

A new type of fastener has recently been developed which includes a screw-on cap. As well as solving the problem of the caps falling off, these caps are made from aluminium which reduces corrosion when used with aluminium sheeting. However, corrosion still occurs where the steel shank of the fastener comes into contact with the sheeting.

The objective of the present invention is to address this latter difficulty. A fastener for securing a panel to a support structure according to the present invention comprises: a head; a shank which is passed through the panel and into the support structure and has at least one protrusion for widening the hole in the panel through which the shank is passed; and an insulating sleeve, located around a portion of the shank between the head and the protrusion, and adapted to pass into the widened hole in the panel to insulate that portion of the shank from the panel.

The protrusion effectively spaces the shank from the hole formed in the panel, thus reducing the likelihood of contact between the two. Once installed, the insulating sleeve prevents contact between the panel and the shank of the fastener and prevents corrosion of the shank.

Preferbably, the fastener is adapted for securing aluminium roofing sheets to a roofing support structure. The shank is typically steel.

Typically, two protrusions are provided, on opposite sides of the shank. The provision of two protrusions adds greater symmetry to the fastener and also eases the widening of the hole during the fastening operation.

Preferably, all of the portion of the shank which comes into contact with the panel is insulated by the sleeve. The sleeve may be nylon.

Preferably, the protrusion or protrusions acts or act to retain the sleeve in position on the shank. The protrusions may secure the sleeve either by passing directly through them or by simply acting as a stop to prevent the sleeve sliding on the shank.

The protrusion or protrusions may be spaced from the head portion by a distance which substantially corresponds with the length of the sleeve. The positioning of the protrusions in such a way provides the advantage of widening the hole in the metal sheet during fastening, protecting the nylon sleeve from the metal sheet and underlying structure during the drilling process and also securing the sleeve on the shank. This effect is enhanced when the radially outermost parts of the protrusions extend beyond the radial extremity of the sleeve.

Alternatively, a recess may be provided on the shank to locate the sleeve and thereby the sleeve is held in position and protected.

The present invention will now be described by way of example with reference to the accompanying drawings, in which:
Fig. 1 is an elevational view of an assembled fastener;
Fig. 2 is a cross sectional view of an assembled fastener with the sleeve removed;
Fig. 3 shows the shank of the fastener;
Fig. 4a is a plan view of the sleeve; and
Fig. 4b is an elevational view of the sleeve.

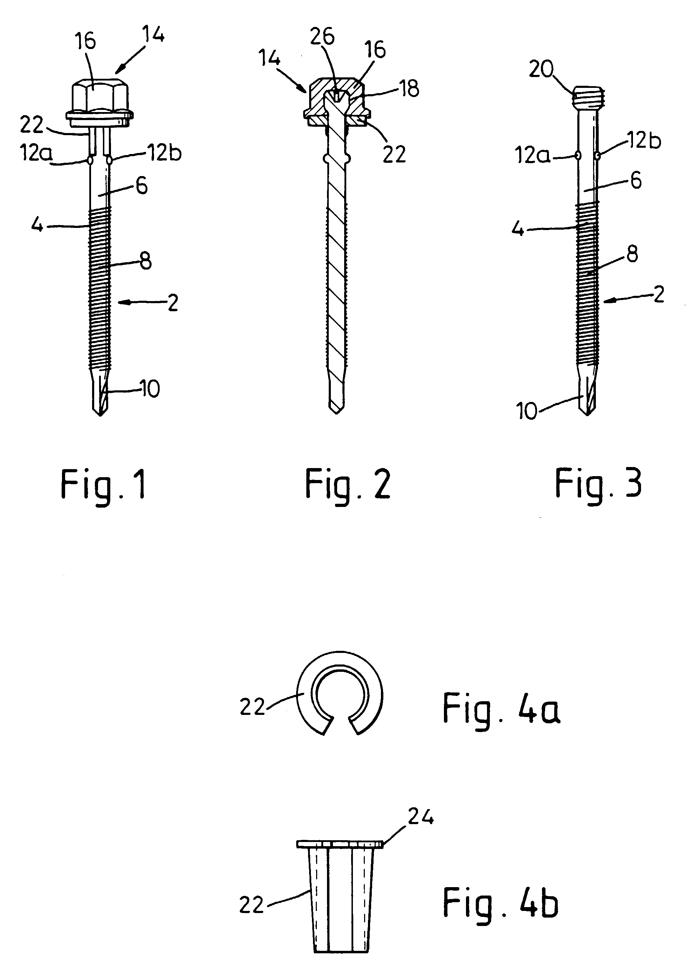

Referring to Fig. 1, the fastener 2 comprises a steel shank 4 having an upper plain portion 6 a screw threaded middle portion 8 and a lower portion 10 shaped into a drill bit. Two protrusions or wings 12a, 12b are formed on opposite sides of the plain shank portion 6 and are spaced from the head 14 of the fastener to provide a seat for a shank sleeve 22 which is thereby secured between the head 14 and the protrusions 12a, 12b. The head 14 comprises a removable cap 16 which is shaped into a hexagonal nut on its outer surface so as to provide means to secure the fastener to the head 20 of the screw after the latter has been fixed. The cap has a centrally located blind tapped hole 18 formed in its lower side which co-operates with the screw threaded head 20 of the shank 2 so as to allow the cap 16 to be secured to the shank. A washer 22 is provided to space the lower surface of the cap 16 from the aluminium sheet (not shown).

Referring to Figs. 4a and 4b, the sleeve 22 consists of a split ring having straight interior walls and frustoconical exterior walls which wide upwardly and terminate in an upper flange 24. The ring 22 is split so as to ease fixation onto the upper portion of the shaft 6.

In use, the screw gun (not shown) engages with the hexagon shape of the cap 14 so as to drive the tip 10 of the shaft through an aluminium sheet to secure it onto a structure below. As the shank of the fastener penetrates the structure the protrusions 12a and 12b come directly into contact with the aluminium sheet and cause the hole made in the sheet to widen slightly thereby easing the passage of the nylon sleeve 22 through the aluminium sheet. Similarly, the protrusions have the same effect when penetrating the structure below the aluminium sheet. A cross head socket 26 is provided in the top of the head of the shaft 2 which can be used to remove the fastener should the need subsequently arise.

The effect of the sleeve is to protect the steel shank from the corrosion which might otherwise occur if the shank came into contact with the aluminium sheet.

Variations and modifications to the invention are possible. For instance, the position of the protrusions 12a and 12b can be varied on the length of the shaft but it is felt that the positioning immediately below the lower end of the nylon sleeve which provides the additional advantages of protecting the sleeve and holding the sleeve in position is best.

## Claims

1. A fastener for securing a panel to a support structure, comprising a head; a shank which is passed through the panel and into the support structure and has at least one protrusion for widening the hole in the panel through which the shank is passed; and an insulating sleeve, located around a portion of the shank between the head and the protrusion, and adapted to pass into the widened hole in the panel to insulate that portion of the shank from the panel.

2. A fastener according to claim 1 adapted for securing aluminium roofing sheets to a roofing support structure.

3. A fastener according to claim 1 or claim 2 in which the shank is steel.

4. A fastener according to any preceding claim in which two protrusions are provided, on opposite sides of the shank.

5. A fastener according to any preceding claim in which all of the portion of the shank which comes into contact with the panel is insulated by the sleeve.

6. A fastener according to any preceding claim in which the sleeve is nylon.

7. A fastener according to any preceding claim in which the protrusion or protrusions acts or act to retain the sleeve in position on the shank.

8. A fastener according to claim 7 in which the protrusion or protrusions is or are spaced from the head portion by a distance which substantially corresponds with the length of the sleeve.

9. A fastener as claimed in claim 7 or claim 8 in which the radially outermost parts of the protrusion or protrusions extend beyond the radial extremity of the sleeve.

10. A fastener as described with reference to and as illustrated in the accompanying drawings.
